Europäisches Patentamt

European Patent Office

Office européen des brevets

(11) Veröffentlichungsnummer: **0 261 483 B1**

# EUROPÄISCHE PATENTSCHRIFT

(45) Veröffentlichungstag der Patentschrift: **20.03.91**

(51) Int. Cl.⁵: **H04H 7/00**, H04B 1/20

(21) Anmeldenummer: **87112968.0**

(22) Anmeldetag: **04.09.87**

(54) Einrichtung zum Durchschalten von Audio-Signalen.

(30) Priorität: **09.09.86 DE 3630678**

(43) Veröffentlichungstag der Anmeldung:
**30.03.88 Patentblatt  88/13**

(45) Bekanntmachung des Hinweises auf die
Patenterteilung:
**20.03.91 Patentblatt  91/12**

(84) Benannte Vertragsstaaten:
**CH DE FR GB IT LI**

(56) Entgegenhaltungen:
**EP-A- 0 130 036**
**EP-A- 0 172 928**
**DE-A- 2 622 697**
**NL-A- 8 400 115**
**US-A- 4 337 480**

(73) Patentinhaber: **Siemens Aktiengesellschaft**
**Wittelsbacherplatz 2**
**W-8000 München 2(DE)**

(72) Erfinder: **Seen, Manfred, Dipl.-Ing. (FH)**
**Sommerstrasse 18**
**W-8120 Weilheim(DE)**
Erfinder: **Kretschmann, Heinz-Peter, Dipl.-Ing.**
**(FH)**
**Reindlweg 6**
**W-8110 Seehausen(DE)**

**Beschreibung**

Die Erfindung betrifft eine Einrichtung zum Durchschalten von Audio-Signalen zwischen einem Breitbandnetz und Audioquellen sowie Audio-Senken.

An ein Breitbandnetz sollen unterschiedliche Audioquellen und Audiosenken angeschaltet werden. Beispiele für Audioquellen sind Mikrofone, Plattenspieler oder ein Rundfunktuner; Beispiele für Audiosenken sind Tonbandgeräte oder Lautsprecher. Die Audioquellen sollen nicht nur über einen Sendebus - über eine Vermittlungseinrichtung - an ein Breitbandnetz angeschlossen werden können, sondern auch mit den Tonsenken des Teilnehmers verbunden werden können. Natürlich sind auch die Audiosenken über einen Audio-Empfangsbus an das Breitbandnetz anschließbar. Über das Breitbandnetz wird beispielsweise der Ton eines Fernsehprogramms übertragen. Es ist natürlich möglich, mit Hilfe eines Koppelfeldes beliebige Verbindungen zwischen Audioquellen und Audiosenken herzustellen und diese auch an das Breitbandnetz anzuschließen. Ein solches Koppelfeld wäre jedoch sehr umfangreich.

Aufgabe der Erfindung ist es, eine Einrichtung zum Durchschalten von Audiosignalen mit geringem Schaltungsaufwand anzugeben.

Eine zum Durchschalten von Audiosignalen zwischen Audioquellen und Senken geeignete Einrichtung ist auch aus der EP-A-0 130 036 sekannt es ist hier jedoch keine Ankoppelung an ein Breitbandnetz vorgesehen.

Diese Aufgabe wird durch die im Patentanspruch 1 angegebenen Merkmale gelöst. Vorteilhafte Ausbildungen der Erfindung sind in den Unteransprüchen angegeben.

Besonders vorteilhaft ist, daß durch die Verwendung von Bussystemen nur ein geringer Schaltungsaufwand benötigt wird und ein einfacher, jederzeit erweiterungsfähiger Aufbau realisierbar ist. Hierbei ist es stets möglich, die unterschiedlichsten Audioquellen und Audiosenken mit Hilfe von unterschiedlichen Quellen-Anpassungsbaugruppen und Senken-Anpassungsbaugruppen an einen Audio-Quellen-Bus bzw. Audio-Senken-Bus anzuschließen. Ebenso ist beispielsweise die Zusammenfassung von Stereokanälen zu einem Monokanal möglich.

Über eine Mischeinrichtung können die Signale des AudioQuellen-Busses mit den Signalen des Empfangsbusses gemischt und auf den Audio-Senken-Bus geschaltet werden.

Eine Sprech-Anschalt-Einrichtung ermöglicht das Aufschalten einer Sprechquelle auf den Audio-Quellen-Bus. Die Signale dieser Sprechquelle können in einer Sprech-SenkenAnpassungsbaugruppe wieder subtrahiert werden, so daß keine Rückkopplungen auftreten.

Die Audioquellen werden je nach Bedarf über Schalter auf den Audio-Quellen-Bus aufgeschaltet. Die Senken-Anpassungsbaugruppen sind - je nach Bedarf - fest an den Audio Senken-Bus angeschaltet oder können ebenfalls über Schalter angeschaltet werden.

Bei allen Anschaltbaugruppen wird vorteilhafterweise eine Pegelanpassung vorgesehen. Um auch mehrere Audioquellen gleichzeitig auf den Audio-Quellen-Bus schalten zu können, werden die Ausgänge der Quellen-Anpassungs-baugruppen relativ hochohmig ausgeführt und zwischen dem Audio-Quellen-Bus und dem an das Breitbandnetz angeschlossenen Audio-Sendebus Kanalverstärker eingefügt, an deren Eingänge die Summensignale gebildet werden.

Vorteilhaft ist ferner, daß die Einrichtung zum Durchschalten von Audiosignalen prinzipiell in ihrer Realisierung einer Einrichtung zum Durchschalten von Videosignalen entspricht, so daß den Videosignalen zugehörige Audiosignale entsprechend durchgeschaltet werden können, wodurch der Aufwand für die Steuerung gering bleibt.

Ein Ausführungsbeispiel der Erfindung wird anhand der Figuren 1 bis 3 näher erläutert. Es zeigen

Fig. 1 ein Prinzipschaltbild der Einrichtung zum Durchschalten von Audiosignalen,

Fig. 2 eine Umschaltund Mischbaugruppe und

Fig. 3 ein Audio-Bus-System.

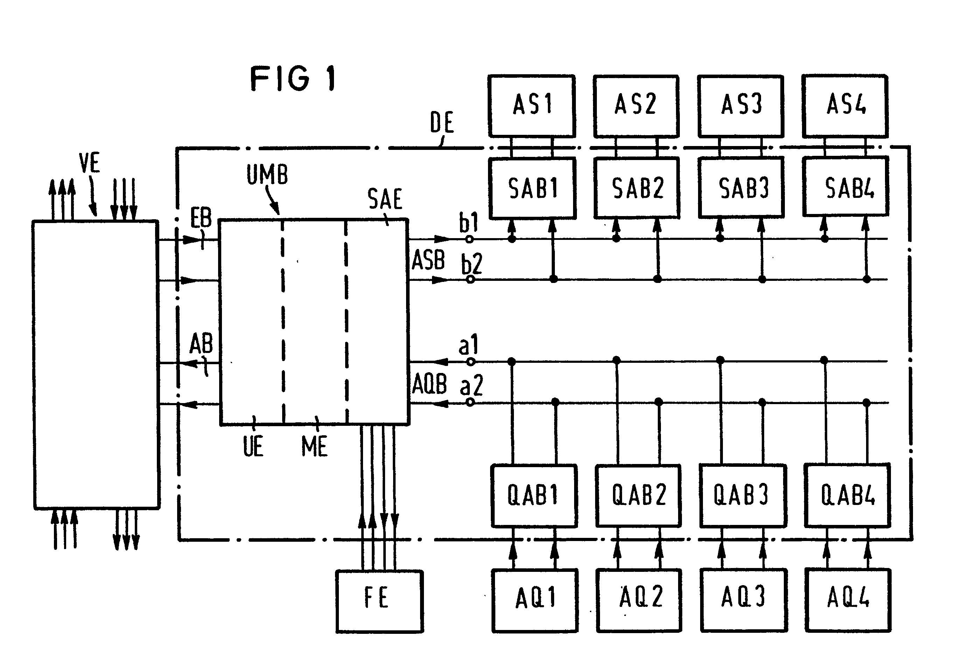

Die in Fig. 1 dargestellte Einrichtung DE zum Durchschalten von Audiosignalen enthält im wesentlichen eine Umschalt-und Mischbaugruppe UMB, die über einen Audio-Sendebus AB und einen Audio-Empfangsbus EB an eine Vermittlungseinrichtung VE eines Breitbandnetzes angeschlossen ist. Außerdem ist die Umschalt- und Mischbaugruppe mit einem Audio-Quellen-Bus AQB und einem Audio-Senken-Bus ASB verbunden, an den die Geräte des Teilnehmers angeschaltet sind. An den Audio-Quellen-Bus sind über Quellen-Anpassungsbaugruppen QAB1 bis QAB4 Audioquellen AQ1 bis AQ4 angeschaltet. Ebenso sind an den Audio-Senken-Bus ASB über Senken-Anpassungsbaugruppen SAB1 bis SAB4 Audiosenken-AS1 bis AS4 angeschaltet. Die Umschalt- und Mischbaugruppe UMB umfaßt eine Umschalteinrichtung UE, eine Mischeinrichtung ME und - in diesem Ausführungsbeispiel - auch eine Sprech-Anschalt-Einrichtung SAE. An diese ist eine Sprecheinrichtung FE (Fernsprecheinrichtung) angeschlossen. Die Umschalteinrichtung UE gestattet die Herstellung aller sinnvollen Verbindungen zwischen den Bussen. Die Mischeinrichtung ME gestattet nicht nur das Mischen verschiedener Audioquellen des Teilnehmers, sondern zusätzlich auch das Mischen von auf den Audio-Quellen-Bus geschalteten Audiosignalen mit über den Audio-Empfangsbus übertragenen Signale. An die Audio-Busse AQB und ASB kann eine große Anzahl von Audioquellen bzw. Audiosenken angeschaltet werden. Dieses Ausführungsbeispiel beschränkt sich auf Bussysteme mit jeweils zwei Busleitungen. Natürlich können auch Bussysteme mit mehreren Leitungen verwendet werden, wodurch die Anzahl der gleichzeitig möglichen individuellen Verbindungen zwischen Audioquellen und Audiosenken erhöht wird. In den weitaus meisten Fällen dürften jedoch stereofähige Audio-Busse mit jeweils zwei Busleitungen ausreichen. Die Verwendung von Audiobussen mit mehr als jeweils vier Busleitungen (zwei Stereo-Vollkanäle) erscheint nicht zweckmäßig.

Die Sprech-Anschalt-Einrichtung SAE gestattet das Aufschalten einer Sprechquelle der Sprecheinrichtung FE, ohne daß das Sprechsignal wieder der Sprecheinrichtung FE zugeführt wird.

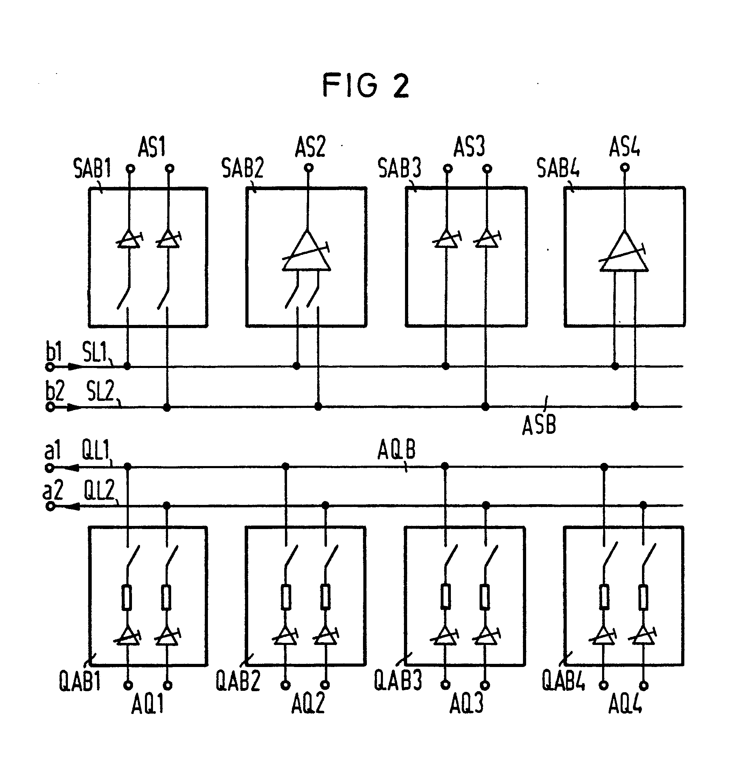

In Fig. 2 sind der Audio-Quellen-Bus und der Audio-Senken-Bus sowie die Anpassungsbaugruppen näher dargestellt. Der Audio-Quellen-Bus AQB umfaßt eine erste Quellenbus-Leitung QL1 und eine zweite Quellenbus-Leitung QL2. An diese Quellenbus-Leitungen sind die Ausgänge der Quellen-Anpassungsbaugruppen QAB1 bis QAB4 angeschlossen, die jeweils zwei Eingänge und zwei Ausgänge aufweisen, so daß die stereofähigen Audioquellen AQ1 bis AQ4 angeschaltet werden können. Zur Pegelanpassung kann die Verstärkung der Quellen-Anschaltbaugruppen variiert werden. Natürlich ist auch eine Anpassung an die Ausgangswiderstände der Audioquellen möglich. Über Schalter (mechanisch/ elektronisch) wird jeweils die gewünschte Audioquelle auf den Audio-Quellen-Bus geschaltet. Es können jedoch auch die Signale mehrerer Audioquellen gemischt werden.

Entsprechend sind an Senkenbus-Leitungen SL1 und SL2 des Audio-Senken-Busses die Senken-Anpassungsbaugruppen SAB1 bis SAB4 angeschaltet; die Verstärkungen und - falls notwendig - auch die Ausgangswiderstände sind einstellbar. Die Senken-Anpassungsbaugruppen SAB1 und SAB2 sind hierbei über Schalter von den Senkenbus-Leitungen abtrennbar, während die Senken-Anpassungsbaugruppen SAB3 und SAB4 dagegen immer fest eingeschaltet sind. In den Senken-Anschaltbaugruppen SAB2 und SAB4 sind Additionsverstärker vorgesehen, die zur Umsetzung eines Stereosignals in ein Monosignal dienen.

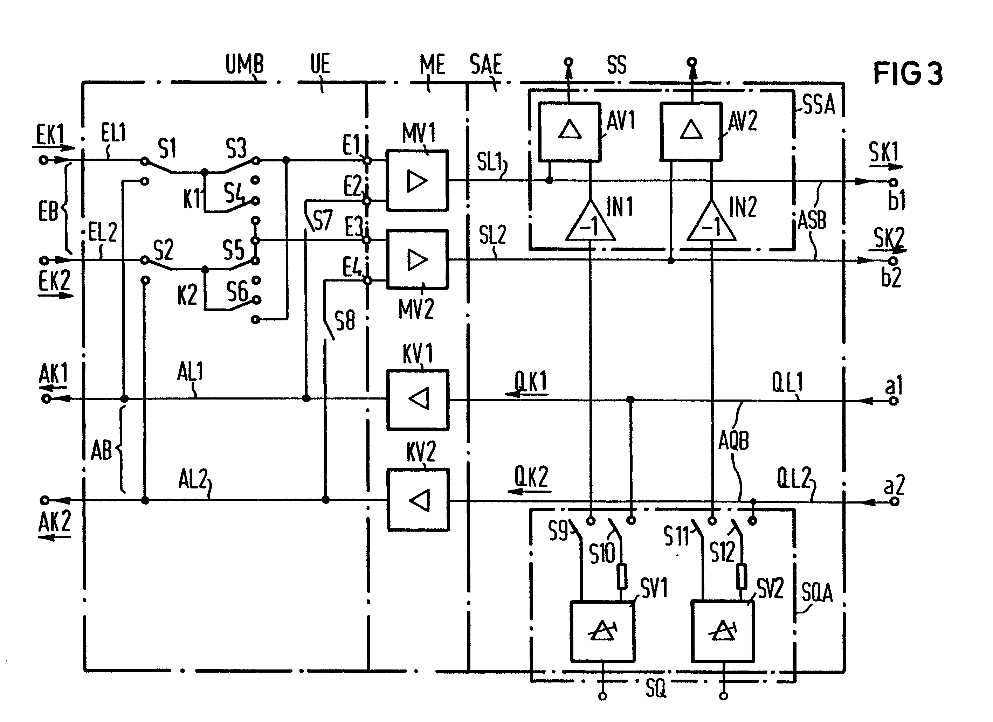

In Fig. 3 ist die Umschalt- und Mischbaugruppe UMB detailliert dargestellt. Die Schaltungspunkte a1, a2 und b1 und b2 sind mit den gleich bezeichneten Schaltungspunkten der Fig. 2 verbunden. Der Audio-Quellen-Bus AQB wird über zwei Kanalverstärker KV1 und KV2 der Mischeinrichtung ME mit den entsprechenden Sendebusleitungen AL1, AL2 des Audio-Sendebusses AB verbunden.

Die Umschalteinrichtung UE ist außerdem über den AudioEmpfangsbus EB an die Vermittlungseinrichtung VE des Breitbandnetzes angeschlossen. Der Audio-Empfangsbus besteht aus zwei Empfangsbus-Leitungen EL1 und EL2. Die Umschalteinerichtung UE enthält im wesentlichen zwei Schaltersätze S1, S3, S4 und S2, S5, S6, die es jeweils gestatten, jede der Leitungen AL1, AL2 und EL1, EL2 mit jeder oder beiden Senkenbus-Leitungen SL1 und SL2 zu verbinden.

Den Leitungen der Busse werden zur - um die Beschreibung der Funktion zu erleichtern - Audio-Kanäle zugeordnet, die entsprechend mit erstem oder zweitem Quellenkanal QK1, QK2; senkenkanal SK1, SK2; Sendekanal SK1, SK2 und Empfangskanal EK1, EK2 bezeichnet sind.

Außerdem ist es möglich, mit Hilfe zweier zusätzlicher Schalter S7 und S8 die Quellenkanäle QK1 und QK2 mit den Signalen auf den Empfangsbusleitungen EL1 und EL2 zu mischen. Dies geschieht mit Hilfe von zwei Mischverstärkern MV1 und MV2 der Mischeinrichtung ME. Die ersten Eingänge E1 bzw. E3 der Mischverstärker sind hierzu über die Schaltersätze S1, S3, S4 und S2, S5, S6 jeweils mit den Eingangsbus-Leitungen EL1 und EL2 verbunden und die zweiten Eingänge E2, E4 sind über die weiteren Schalter mit den Ausgangsleitungen AL1 und AL2 verbunden. An die Ausgänge der Mischverstärker MV1 und MV2 sind die Senkenbus-Leitungen SL1 und SL2 angeschaltet.

Hier sollen noch einige weitere Schaltungsmöglichkeiten der Umschalteinrichtung UE näher erläutert werden. Als Standardfall kann die Durchschaltung der Empfangskanäle EK1 und EK2 über die Schalter S1, S3 bzw. S2 und S5 auf den Audio-Senken-BUS ASB angesehen werden. Hierbei können die Quellenkanäle QK1 und QK2 über die weiteren Schalter S7, S8 hinzugemischt werden. Ebenso kann der Empfangsbus aufgetrennt werden und die Sendekanäle AK1, AK2 auf den Audio-Senken-Bus ASB geschaltet werden.

Es kann jedoch auch ein Empfangskanal, beispielsweise EK1, über die Schalter S1, S3 und S2, S4 auf beide Senkenbus-Leitungen SL1, SL2 geschaltet werden (Mono-Schaltung). Dies ist ebenso mit jedem Sendekanal AK1, AK2 möglich.

Der Umschalt- und Mischbaugruppe UMB ist außerdem eine Sprech-Anschalt-Einrichtung SAE zugeordnet, bei der eine Sprechquelle SQ über eine Sprechquellen-Anschlußbaugruppe SQA angeschaltet ist. Diese enthält für jeden Sprechkanal einen Sprechverstärker SV1 und SV2. Jeder Verstärker besitzt zwei Ausgänge, von denen jeweils der hochohmige erste über Schalter S10 bzw. S12 auf jeweils eine Quellen-Busleitung QL1 bzw. QL2 schaltbar ist. Der zweite Ausgang jedes Sprechverstärkers ist ebenfalls über S9 bzw. S11 mit einer Sprechsenken-Anschlußbaugruppe SSA verbunden. Diese enthält zwei Additionsverstärker AV1 und AV2, von denen der erste Eingang jeweils mit einer Senkenbus-Leitung SL1 bzw. SL2 verbunden ist. Der zweite Eingang des ersten Additionsverstärkers AV1 ist über einen ersten invertierenden Verstärker IN1 an den zweiten Ausgang des ersten Sprechverstärkers SV1 anschaltbar. Ebenso ist der zweite Eingang des zweiten Additionsverstärkers AV2 über einen zweiten invertierenden Verstärker IN2 an den zweiten Ausgang des zweiten Sprechverstärkers SV2 anschaltbar.

Diese Schaltungsanordnung gestattet, daß die Signale der Sprechquelle SQ beliebig mit den Signalen auf den Empfangsbus oder mit weiteren Signalen der Audioquellen AQ1, AQ2... gemischt werden können und auf den Audio-SenkenBus geschaltet werden können. In der Sprechsenken-Anschlußbaugruppe SSA werden jedoch die Signale der Sprechquelle wieder subtrahiert, so daß diese an den Ausgängen der Additionsverstärker AV1 und AV2 nicht mehr anliegen, wodurch sich Rückkopplungseffekte vermeiden lassen. Auf die invertierenden Verstärker IN1, IN2 kann selbstverständlich verzichtet werden, wenn die Additionsverstärker durch Subtraktionsverstärker ersetzt werden oder die Sprechverstärker invertierende zweite Ausgänge aufweisen.

Bei allen Verstärkern ist selbstverständlich, daß Eingangs-und Ausgangswiderstände dem Verwendungszweck entsprechend dimensioniert werden. Ebenso, daß offene Verstärkereingänge zumindest wechselspannungsmäßig geerdet werden, so daß Einstreuungen von Störspannungen vermieden werden.

**Ansprüche**

1. Einrichtung zum Durchschalten von Audiosignalen zwischen einem Breitbandnetz und Audioquellen (AQ1, AQ2,...) sowie Audiosenken (AS1,AS2,...),
   **dadurch gekennzeichnet,**
   daß an einen stereotauglichen Audio-Quellen-Bus (AQB) mehrere Audioquellen (AQ1, AQ2,...) über Quellen-Anpassungsbaugruppen (QAB1, QAB2,...) anschaltbar sind, daß an einen stereotauglichen Audio-Senken-Bus (ASB) mehrere Audiosenken (AS1, AS2,...) über Senken-Anpassungsbaugruppen (SAB1, SAB2,...) anschaltbar sind und daß eine Umschalt- und Mischbaugruppe (UMB) vorgesehen ist, über die der Audio-Quellen-Bus (AQB) mit einem Audio-Sendebus (AB) des Breitbandnetzes verbunden ist und der Audio-Senken-Bus (ASB) mit einem Audio-Empfangs-

Bus (EB) des Breitbandnetzes oder dem Audio-Sendebus (AB) verbunden werden kann.

2. Einrichtung nach Anspruch 1,
   **dadurch gekennzeichnet,**
   daß die Umschalt- und Mischbaugruppe (UMB) eine Umschalteinrichtung (UE) mit Schaltersätzen (S1, S3, S4 und S2, S5, S6) enthält, über die jede Empfangsbus-Leitung (EL1, EL2) des Audio-Empfangsbusses (EB) oder jede Sendebus-Leitung (AL1, AL2) des Audio-Sende-Busses (AB) mit jeder Senkenbus-Leitungen (SL1, SL2) des Audio-Senken-Busses (ASB) verbunden werden kann.

3. Einrichtung nach Anspruch 1 oder 2,
   **dadurch gekennzeichnet,**
   daß die Umschalt- und Mischbaugruppe (UMB) eine Mischeinrichtung (ME) mit Kanalverstärkern (KV1, KV2) zwischen den Quellenbus-Leitungen (QLI, QL2) und den Sendebus-Leitungen (AL1, AL2) enthält, daß Mischverstärker (MV1, MV2) vorgesehen sind, deren ersten Eingänge (E1, E3) mit Anschlüssen der Schaltersätze der Umschalteinrichtung (UE) verbunden sind, daß jeweils die zweiten Eingänge (E2, E4) der Mischverstärker (MV1, MV2) über zusätzliche Schalter (S7, S8) an jeweils eine Sendebus-Leitung (AL1, AL2) angeschaltet werden können und daß an die Ausgänge der Mischverstärker (MV1, MV2) jeweils eine Senkenbus-Leitung (SL1, SL2) angeschlossen ist.

4. Einrichtung nach einem der vorhergehenden Ansprüche,
   **dadurch gekennzeichnet,**
   daß die Umschalt- und Mischbaugruppe (UMB) zusätzlich eine Sprech-Anschalt-Einrichtung (SAE) mit einer Sprechquellen-Anschlußbaugruppe (SQA) und einer SprechsenkenAnschlußbaugruppe (SSA) enthält, daß die Sprechquellen-Anschlußbaugruppe (SQA) zwei Sprechverstärker (SV1, SV2) mit jeweils zwei Ausgängen enthält, von denen einer an eine Quellenbus-Leitung (QL1, QL2) anschaltbar ist, daß die Sprechsenken-Anschlußbaugruppe (SSA) zwei Additionsverstärker (AV1, AV2) enthält, deren erster Eingang jeweils an eine Senkenbus-Leitung (SL1, SL2) anschaltbar ist und deren zweiter Eingang jeweils über einen invertierenden Verstärker (IN1, IN2) an den zweiten Ausgang des zugehörigen Sprechverstärkers (SV1, SV2) anschaltbar ist.

5. Einrichtung nach einem der vorhergehenden Ansprüche,
   **dadurch gekennzeichnet,**

daß als Senken-Anpassungsbaugruppen (SAB1, SAB2,...) Verstärker mit hochohmigen Eingangswiderständen und einstellbaren Ausgangspegeln vorgesehen sind.

6. Einrichtung nach einem der vorhergehenden Ansprüche,
**dadurch gekennzeichnet,**
daß als Senken-Anpassungsbaugruppen (SAB4) Stereo-MonoWandler vorgesehen sind.

7. Einrichtung nach einem der vorhergehenden Ansprüche,
**dadurch gekennzeichnet,**
daß die Ausgänge der Quellen-Anpassungsbaugruppen (QAB1, QAB2,...) und die Eingänge von Senken-Anpassungsbaugrup-pen (AS1, AS2, ...) über Schalter an die Busleitungen (QL1, QL2; SL1, SL2) anschaltbar sind.

8. Einrichtung nach einem der vorhergehenden Ansprüche,
**dadurch gekennzeichnet,**
daß die Quellen-Anpassungsbaugruppen (QAB, QAB2,...) hochohmige Ausgangswiderstände aufweisen und die Kanalverstärker (KV1, KV2) als Summierverstärker ausgelegt sind.

9. Einrichtung nach einem der vorhergehenden Ansprüche,
**dadurch gekennzeichnet,**
daß jeder Audio-Bus $2^n$ (n = 1, 2, 3) Busleitungen umfaßt.

## Claims

1. Device for through-connecting audio signals between a broadband network and audio sources (AQ1, AQ2, ...) as well as audio sinks (AS1, AS2, ...), characterized in that a plurality of audio sources (AQ1, AQ2, ...) can be connected to an audio source bus (AQB) having stereo capability via source-matching assemblies (QAb1, QAB2, ...), in that a plurality of audio sinks (AS1, AS2, ...) can be connected to an audio sink bus (ASB) having stereo capability via sink-matching assemblies (SAB1, SAB2, ...) and in that a transfer and mixing assembly (UMB) is provided via which the audio source bus (AQB) is connected to an audio transmitting bus (AB) of the broadband network and the audio sink bus (ASH) can be connected to an audio receiving bus (EB) of the broadband network or to the audio transmitting bus (AB).

2. Device according to Claim 1, characterized in that the transfer and mixing assembly (UMB) contains a transfer device (UE) with switch sets (S1, S3, S4 and S2, S5, S6) via which each receiving bus line (EL1, EL2) of the audio receiving bus (EB) or each transmitting bus line (AL1, AL2) of the audio transmitting bus (AB) can be connected to each sink bus line (SL1, SL2) of the audio sink bus (ASB).

3. Device according to Claim 1 or 2, characterized in that the transfer and mixing assembly (UMB) contains a mixing device (ME) with channel amplifiers (KV1, KV2) between the source bus lines (QL1, QL2) and the transmitting bus lines (AL1, AL2), in that mixing amplifiers (MV1, MV2) are provided the first inputs (E1, E3) of which are connected to terminals of the switch sets of the transfer device (UE), in that in each case the second inputs (E2, E4) of the mixing amplifiers (MV1, MV2) can be connected via additional switches (S7, S8) to in each case one transmitting bus line (AL1, AL2), and in that in each case a sink bus line (SL1, SL2) is connected to the outputs of the mixing amplifiers (MV1, MV2).

4. Device according to one of the preceding claims, characterized in that the transfer and mixing assembly (UMB) additionally contains a voice connection device (SAE) with a voice source connection assembly (SQA) and a voice sink connection assembly (SSA), in that the voice source connection assembly (SQA) contains two voice amplifiers (SV1, SV2) with two outputs each, of which one can be connected to a source bus line (QL1, QL2), in that the voice sink connection assembly (SSA) contains two addition amplifiers (AV1, AV2), the first input of which can be connected in each case to a sink bus line (SL1, SL2) and the second input of which can be connected in each case via an inverting amplifier (IN1, IN2) to the second output of the associated voice amplifier (SV1, SV2).

5. Device according to one of the preceding claims, characterized in that amplifiers with high-impedance input resistors and adjustable output levels are provided as sink-matching assemblies (SAB1, SAB2, ...).

6. Device according to one of the preceding claims, characterized in that stereo-mono converters are provided as sink-matching assemblies (SAB4).

7. Device according to one of the preceding claims, characterized in that the outputs of the source-matching assemblies (QAB1, QAB2, ...)

and the inputs of sinkmatching assemblies (AS1, AS2, ...) can be connected via switches to the bus lines (QL1, QL2; SL1, SL2).

8. Device according to one of the preceding claims, characterized in that the source matching assemblies (QAB, QAB2, ...) have high-impedance output resistors and the channel amplifiers (KV1, KV2) are designed as summing amplifiers.

9. Device according to one of the preceding claims, characterized in that each audio bus comprises $2^n$ (n = 1, 2, 3) bus lines.


**Revendications**

1. Dispositif pour transmettre directement des signaux audio entre un réseau à large bande et des sources audio (AQ1,AQ2,...) ainsi que des récepteurs audio (AS1, AS2,...),
caractérisé par le fait
que plusieurs sources audio (AQ1,AQ2,...) peuvent être raccordées à un bus (AQB), utilisable pour la transmission stéréo, par l'intermédiaire de modules (QAB1,QAB2,...) d'adaptation des sources,
que plusieurs récepteurs audio (AS1,AS2,...) peuvent être raccordés à un bus (ASB), utilisable pour la transmission stéréo, au moyen de modules (SAB1, SAB2,...) d'adaptation des récepteurs, et
qu'il est prévu un module de commutation et de mixage (UMB), au moyen duquel le bus (AQB) de raccordement des sources audio est relié à un bus d'émission audio (AB) du réseau à large bande et que le bus (ASB) de raccordement des récepteurs audio peut être relié à un bus de réception audio (EB) du réseau à large bande ou au bus d'émission audio (AB).

2. Dispositif suivant la revendication 1, caractérisé par le fait que le module de commutation et de mixage (UMB) comporte un dispositif de commutation (U1) muni d'ensembles de commutateurs (S1,S3,S4 et S2, S5, S6), au moyen desquels chaque ligne (EL1,EL2) du bus de réception audio (ES) ou chaque ligne (AL1,AL2) du bus d'émission audio (As> peut être reliée à chacune des lignes (SLI,SL2) du bus (ASB) de raccordement des récepteurs audio.

3. Dispositif suivant la revendication 1 ou 2, caractérisé par le fait
que le module de commutation et de mixage (UMB) contient un dispositif mélangeur (ME) comportant des amplificateurs de canaux (KV1,KV2) branchés entre les lignes (QI1,QL2) du bus de raccordement des sources et les lignes (AL1,AL2) du bus d'émission,
qu'il est prévu des amplificateurs mélangeurs (MV1,MV2), dont des premières entrées (E1,E3) sont raccordées à des bornes des ensembles de commutateurs du dispositif de commutation (U4),
que respectivement les secondes entrées (E2,E4) des amplificateurs mélangeurs (MV1,MV2) peuvent être raccordées à des lignes respectives (AL1,AL2) du bus d'émission, par l'intermédiaire d'interrupteurs supplémentaires (S7,S8), et que respectivement une ligne (SL1,SL2) du bus d'émission est raccordée aux sorties des amplificateurs mélangeurs (MV1, MV2).

4. Dispositif suivant l'une des revendications précédentes, caractérisé par le fait
que le module de commutation et de mixage (UMB) possède en outre un dispositif (SAE) de raccordement pour les signaux vocaux, comportant un module (SQA) de raccordement des sources de signaux vocaux et un module (SSA) de raccordement des récepteurs de signaux vocaux,
que le module (SQA) de raccordement des sources de signaux vocaux possède deux amplificateurs (SV1,SV2) des signaux vocaux, comportant chacun deux sortie, dont l'une peut être raccordée à une ligne (QL1,QL2) du bus de raccordement des sources,
que le module (SSA) de raccordement des récepteurs de signaux vocaux posséde deux amplificateurs additionneurs (AV1,AV2), dont la première entrée peut être raccordée à une ligne (SL1,SL2) du bus de raccordement des récepteurs et dont la seconde entrée peut être raccordée, par l'intermédiaire d'un amplificateur inverseur (IN1,IN2), à la seconde sortie de l'amplificateur associé (SV1,SV2) des signaux vocaux.

5. Dispositif suivant l'une des revendications précédentes, caractérisé par le fait qu'il est prévu, comme modules (SAB1,SAb2,...) d'adaptation des récepteurs, des amplificateurs possédant des résistances d'entrée de forte valeur ohmique et des niveaux de sortie réglables.

6. Dispositif suivant l'une des revendications précédentes, caractérisé par le fait qu'il est prévu, comme modules (SAB4) de raccordement des sources, des convertisseurs stéréo-mono.

7. Dispositif suivant l'une des revendications précédentes, caractérisé par le fait que les sorties des modules (QAB1,QAB2,...) d'adaptation des sources et les entrées de modules (AS1,AS2,...) d'adaptation des récepteurs peuvent être raccordées, par l'intermédiaire d'interrupteurs, aux lignes (QL1,QL2;SL1,SL2) des bus.

8. Dispositif suivant l'une des revendications précédentes, caractérisé par le fait que les modules (QAB,QAB2,...) d'adaptation des sources possèdent des résistances de sortie de forte valeur ohmique et que les amplificateurs de canaux (KV1,KV2) sont agencés sous la forme d'amplificateurs de sommation.

9. Dispositif suivant l'une des revendications précédentes, caractérisé par le fait que chaque bus audio comprend $2^n$ (n = 1,2,3) lignes de bus.

FIG 1

## FIG 2

FIG 3

EP 0 261 483 B1